# EUROPEAN PATENT SPECIFICATION

(11) **EP 3 135 058 B1**
(45) Date of publication and mention of the grant of the patent: **02.01.2019**
(21) Application number: 15782280.0
(22) Date of filing: 24.04.2015
(51) Int. Cl.: H04W 36/30, H04W 36/04

(54) **USER EQUIPMENT AND METHODS FOR HANDOVER INITIATION**
BENUTZERVORRICHTUNG UND VERFAHREN FÜR ÜBERGABESTART
ÉQUIPEMENT D'UTILISATEUR ET PROCÉDÉS POUR LE LANCEMENT D'UN TRANSFERT INTERCELLULAIRE

(30) Priority: 25.04.2014 US 201461984673 P
(43) Date of publication of application: 01.03.2017
(73) Proprietor: Intel IP Corporation, Santa Clara, CA 95054 (US)
(72) Inventor: YIU, Candy, Portland, Oregon 97201 (US); PINHEIRO, Ana Lucia, Portland, Oregon 97229 (US)
(74) Representative: Rummler, Felix
(86) International application number: PCT/US2015/027471
(87) International publication number: WO 2015/164712

(56) References cited:
- WO-A1-2013/020599
- WO-A1-2013/100659
- US-A1- 2012 051 327
- US-A1- 2012 155 431
- US-A1- 2012 224 564
- US-A1- 2013 089 077
- US-A1- 2013 196 664
- "3rd Generation Partnership Project; Technical Specification Group GSM/EDGE Radio Access Network; Mobile radio interface layer 3 specification; Radio Resource Control (RRC) protocol (Release 11)", 3GPP DRAFT; 44018-B70, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 5 March 2014 (2014-03-05), XP050906430, Retrieved from the Internet: URL:http://www.3gpp.org/ftp/Specs/2014-12/ Rel-11/44_series/ [retrieved on 2014-03-05]
- "3rd Generation Partnership Project; Technical Specification Group Radio Access Network; Evolved Universal Terrestrial Radio Access (E-UTRA); Radio Resource Control (RRC); Protocol specification (Release 12)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V12.1.0, 19 March 2014 (2014-03-19), pages 1-356, XP050769960, [retrieved on 2014-03-19]

## Description

### TECHNICAL FIELD

Embodiments pertain to wireless communications. Some embodiments relate to cellular communication networks, including networks configured to operation in accordance with the third-generation partnership project (3GPP) long term evolution (LTE) and LTE-advanced (LTE-A) standards. Some embodiments relate to a handover decision based on a measurement report having application information.

### BACKGROUND

When a mobile device (e.g., cell phone, User Equipment (UE)) with an active/ongoing communication connection (e.g., voice or data call) is moving away from the coverage area of a first cell and entering the coverage area of a second cell, the communication connection is transferred to the second cell (target cell) in order to avoid link termination when the phone gets out of coverage of the first cell (source cell). This transfer of a connection is termed a "handover" (or "handoff). There may also be other reasons for performing a handover, such as load balancing.

In a heterogeneous network, a mobile device may operate in a cellular network configured with a macro cell overlay of base stations along with additional micro cells that may offer increased capacity or throughput in small areas. Various performance measurements, such as received signal quality or level, may be performed at the mobile device or at the base stations in order to assist in handover decisions.

Furthermore, handover is becoming increasingly important for device mobility, particularly in a heterogeneous network. However, due to characteristics of micro cells, such as the low-power nature of the micro cells, handover decisions performed in the conventional manner may be less than optimal.

One issue with handover is handover failure. When handover failure occurs, service interruption may occur. This service interruption may be unsuitable for many applications.

Thus, there are general needs for techniques to reduce handover failure. There are general needs for techniques to reduce the service interruption time resulting during handover failure. There are also general needs for improving handover decisions, especially in heterogeneous networks.

WO 2013/020599 A1, WO 2013/100659 A1 and US 2013/0196664 A1 all describe embodiments pertaining to the preamble of the independent claims.

The present invention relates to an apparatus of a User Equipment according to claim 1, and to a method to perform a handover decision according to independent claim 10. Further details are set out in the dependent claims.

The embodiments and/or examples in the following description which are not covered by the appended claims are considered as not forming part of the present invention.

### BRIEF DESCRIPTION OF THE DRAWINGS

FIG. 1 is a functional diagram of a 3 GPP network in accordance with some embodiments;
FIG. 2 is a functional diagram of a User Equipment (UE) in accordance with some embodiments;
FIG. 3 is a functional diagram of an Evolved Node B (eNB) in accordance with some embodiments;
FIG. 4 illustrates an example of a scenario in which a macro cell overlay and multiple micro cells are deployed, in accordance with some embodiments;
FIG. 5 illustrates another example of a scenario in which a macro cell overlay and multiple micro cells are deployed, in accordance with some embodiments;
FIG. 6 illustrates an example of a measurement report configuration message, in accordance with some embodiments;
FIG. 7 illustrates the operation of a method performed by a User Equipment (UE) for handover initiation in a cellular network comprising macro cells and micro cells; and
FIG. 8 illustrates the operation of a method performed by an Evolved Node B (eNB) for a handover decision in a cellular network comprising macro cells and micro cells.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims.

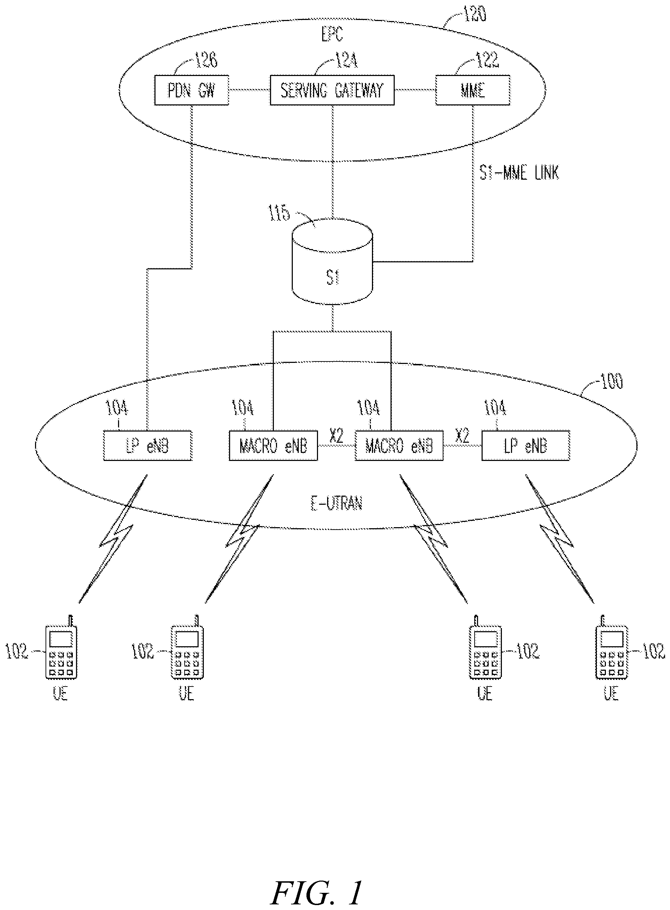

FIG. 1 is a functional diagram of a 3GPP network in accordance with some embodiments. The network comprises a radio access network (RAN) (e.g., as depicted, the E-UTRAN or evolved universal terrestrial radio access network) 100 and a core network 120 (e.g., shown as an evolved packet core (EPC)) coupled together through an S1 interface 115. For the sake of convenience and brevity, only a portion of the core network 120, as well as the RAN 100, is shown.

The core network 120 includes a mobility management entity (MME) 122, serving a gateway (serving GW) 124, and a packet data network gateway (PDN GW) 126. The RAN 100 includes Evolved Node-Bs (eNBs) 104 (which may operate as base stations) for communicating with User Equipments (UEs) 102. The eNBs 104 may include macro eNBs and low power (LP) eNBs, such as micro eNBs.

In some instances, the UE 102 may transmit, to the eNB 104, a measurement report that includes application information to be determined at the UE 102 as part of a potential handover process. The UE 102 can determine application information associated with an application operating on the UE. Additionally, the UE 102 can generate a measurement report having the determined application information. Furthermore, the transmission of the measurement report can be configured to initiate a handover.

For example, the handover can be initiated when the eNB 104 receives, from the UE 102, a measurement report having application information. Subsequently, the eNB 104 can base the handover decision on the received measurement report. The handover can be to a micro cell or a macro cell based on the measurement report.

The MME 122 is similar in function to the control plane of legacy Serving GPRS Support Nodes (SGSN). The MME 122 manages mobility aspects in access such as gateway selection and tracking area list management. The serving GW 124 terminates the interface toward the RAN 100, and routes data packets between the RAN 100 and the core network 120. In addition, it may be a local mobility anchor point for inter-eNB handovers and also may provide an anchor for inter-3GPP mobility. Other responsibilities may include lawful intercept, charging, and some policy enforcement. The serving GW 124 and the MME 122 may be implemented in one physical node or separate physical nodes. The PDN GW 126 terminates an SGi interface toward the packet data network (PDN). The PDN GW 126 routes data packets between the core network 120 and the external PDN, and may be a key node for policy enforcement and charging data collection. It may also provide an anchor point for mobility with non-LTE accesses. The external PDN can be any kind of IP network, as well as an IP Multimedia Subsystem (IMS) domain. The PDN GW 126 and the serving GW 124 may be implemented in one physical node or separate physical nodes.

The eNBs 104 (macro and micro) terminate the air interface protocol and may be the first point of contact for a UE 102. In some embodiments, an eNB 104 may fulfill various logical functions for the RAN 100 including but not limited to RNC (radio network controller functions) such as radio bearer management, uplink and downlink dynamic radio resource management and data packet scheduling, and mobility management. In accordance with embodiments, UEs 102 may be configured to communicate orthogonal frequency-division multiplexing (OFDM) communication signals with an eNB 104 over a multicarrier communication channel in accordance with an orthogonal frequency-division multiple access (OFDMA) communication technique. The OFDM signals may comprise a plurality of orthogonal subcarriers.

The S1 interface 115 is the interface that separates the RAN 100 and the core network 120. It is split into two parts: the S1-U, which carries data traffic between the eNBs 104 and the serving GW 124, and the S1-MME, which is a signaling interface between the eNBs 104 and the MME 122. The X2 interface is the interface between eNBs 104. The X2 interface comprises two parts, the X2-C and X2-U. The X2-C is the control plane interface between the eNBs 104, while the X2-U is the user plane interface between the eNBs 104.

In cellular networks, LP cells are typically used to extend coverage to indoor areas where outdoor signals do not reach well, or to add network capacity in areas with very dense phone usage, such as train stations. As used herein, the term low power (LP) eNB refers to any suitable relatively low power eNB for implementing a narrower cell (narrower than a macro cell) such as a femtocell, a picocell, or a micro cell. Femtocell eNBs are typically provided by a mobile network operator to its residential or enterprise customers. A femtocell is typically the size of a residential gateway or smaller and generally connects to the user's broadband line. Once plugged in, the femtocell connects to the mobile operator's mobile network and provides extra coverage in a typical range of 30 to 50 meters for residential femtocells. Thus, an LP eNB might be a femtocell eNB since it is coupled through the PDN GW 126. Similarly, a picocell is a wireless communication system typically covering a small area, such as in-building (offices, shopping malls, train stations, etc.), or more recently in-aircraft. A picocell eNB can generally connect through the X2 link to another eNB such as a macro eNB through its base station controller (BSC) functionality. Thus, an LP eNB may be implemented with a picocell eNB since it is coupled to a macro eNB via an X2 interface. Picocell eNBs or other LP eNBs may incorporate some or all functionality of a macro eNB. In some cases, this may be referred to as an access point base station or enterprise femtocell.

In some embodiments, a downlink resource grid may be used for downlink transmissions from an eNB 104 to a UE 102, while uplink transmissions from the UE 102 to the eNB 104 may utilize similar techniques. The grid may be a time-frequency grid, called a resource grid or time-frequency resource grid, which is the physical resource in the downlink in each slot. Such a time-frequency plane representation is common for OFDM systems, which makes it intuitive for radio resource allocation. Each column and each row of the resource grid correspond to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises a number of resource blocks, which describe the mapping of certain physical channels to resource elements. Each resource block comprises a collection of resource elements in the frequency domain and may represent the smallest quanta of resources that currently can be allocated. There are several different physical downlink channels that are conveyed using such resource blocks. With particular relevance to this disclosure, two of these physical downlink channels are the physical downlink shared channel and the physical downlink control channel.

The physical downlink shared channel (PDSCH) carries user data and higher-layer signaling to a UE 102. The physical downlink control channel (PDCCH) carries information about the transport format and resource allocations related to the PDSCH channel, among other things. It also informs the UE 102 about the transport format, resource allocation, and hybrid automatic repeat request (HARQ) information related to the uplink shared channel. Typically, downlink scheduling (assigning control and shared channel resource blocks to UEs 102 within a cell) is performed at the eNB 104 based on channel quality information fed back from the UEs 102 to the eNB 104, and then the downlink resource assignment information is sent to a UE 102 on the control channel (PDCCH) used for (assigned to) the UE 102.

The PDCCH uses control channel elements (CCEs) to convey the control information. Before being mapped to resource elements, the PDCCH complex-valued symbols are first organized into quadruplets, which are then permuted using a sub-block inter-leaver for rate matching. Each PDCCH is transmitted using one or more of these CCEs, where each CCE corresponds to nine sets of four physical resource elements known as resource element groups (REGs). Four quadrature phase-shift keying (QPSK) symbols are mapped to each REG. The PDCCH can be transmitted using one or more CCEs, depending on the size of DCI and the channel condition. There may be four or more different PDCCH formats defined in LTE with different numbers of CCEs (e.g., aggregation level L=1, 2, 4, or 8).

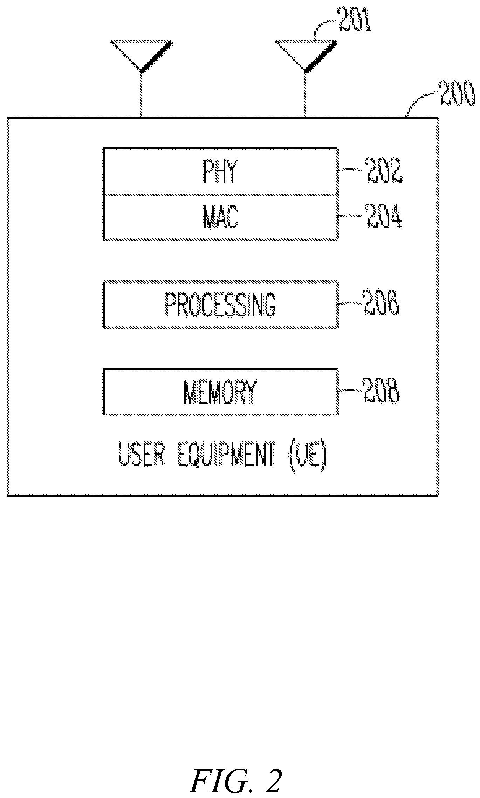

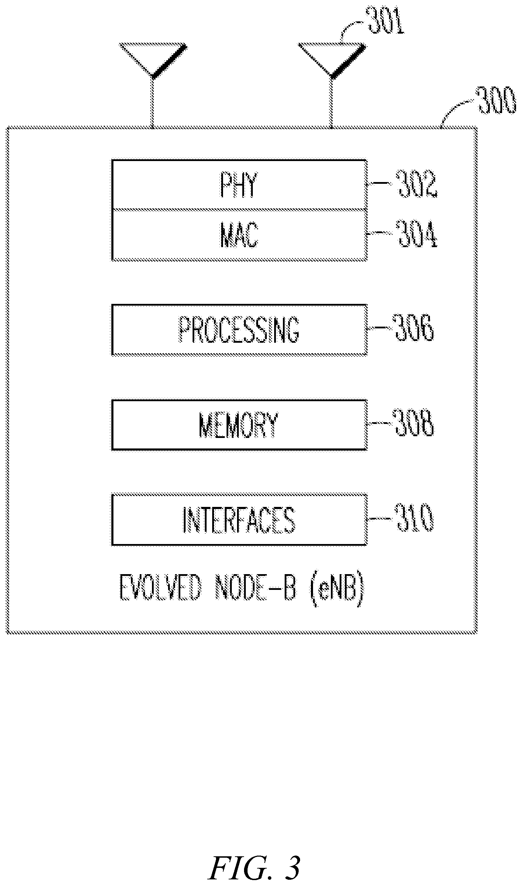

FIG. 2 is a functional diagram of a User Equipment (UE) 200 in accordance with some embodiments. FIG. 3 is a functional diagram of an Evolved Node B (eNB) 300 in accordance with some embodiments. It should be noted that in some embodiments, the eNB 300 may be a stationary non-mobile device. The UE 200 may be a UE 102 as depicted in FIG. 1, while the eNB 300 may be an eNB 104 as depicted in FIG. 1. The UE 200 may include physical layer circuitry 202 for transmitting and receiving signals to and from the eNB 300, other eNBs, other UEs, or other devices using one or more antennas 201, while the eNB 300 may include physical layer circuitry 302 for transmitting and receiving signals to and from the UE 200, other eNBs, other UEs, or other devices using one or more antennas 301. The UE 200 may also include medium access control layer (MAC) circuitry 204 for controlling access to the wireless medium, while the eNB 300 may also include medium access control layer (MAC) circuitry 304 for controlling access to the wireless medium. The UE 200 may also include processing circuitry 206 and memory 208 arranged to perform the operations described herein, and the eNB 300 may also include processing circuitry 306 and memory 308 arranged to perform the operations described herein. The eNB 300 may also include one or more interfaces 310, which may enable communication with other components, including other eNBs 104 (FIG. 1), components in the core network 120 (FIG. 1), or other network components. In addition, the interfaces 310 may enable communication with other components that may not be shown in FIG. 1, including components external to the network. The interfaces 310 may be wired, wireless, or a combination thereof.

The antennas 201, 301 may comprise one or more directional or omnidirectional antennas, including, for example, dipole antennas, monopole antennas, patch antennas, loop antennas, microstrip antennas, or other types of antennas suitable for transmission of radio frequency (RF) signals. In some multiple-input multiple-output (MIMO) embodiments, the antennas 201, 301 may be effectively separated to take advantage of spatial diversity and the different channel characteristics that may result.

In some embodiments, mobile devices or other devices described herein may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), or another device including wearable devices that may receive and/or transmit information wirelessly. In some embodiments, the mobile device or other device can be a UE or an eNB configured to operate in accordance with 3GPP standards. In some embodiments, the mobile device or other device may be configured to operate according to other protocols or standards, including IEEE 802.11 or other IEEE standards. In some embodiments, the mobile device or other device may include one or more of a keyboard, a display, a non-volatile memory port, multiple antennas, a graphics processor, an application processor, speakers, and other mobile device elements. The display may be an LCD screen including a touch screen.

Although the UE 200 and the eNB 300 are each illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs), and combinations of various hardware and logic circuitry for performing at least the functions described herein. In some embodiments, the functional elements may refer to one or more processes operating on one or more processing elements.

Embodiments may be implemented in one or a combination of hardware, firmware, and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. Some embodiments may include one or more processors that may be configured with instructions stored on a computer-readable storage device.

In some embodiments, the UE 200 may be configured to receive OFDM communication signals over a multicarrier communication channel in accordance with an OFDMA communication technique. The OFDM signals may comprise a plurality of orthogonal subcarriers. In some broadband multicarrier embodiments, the eNB 300 may be part of a broadband wireless access (BWA) communication network, such as a Worldwide Interoperability for Microwave Access (WiMAX) communication network, a 3rd Generation Partnership Project (3GPP) Universal Terrestrial Radio Access Network (UTRAN) Long-Term-Evolution (LTE) network, or a Long-Term-Evolution (LTE) communication network, although the scope of this disclosure is not limited in this respect. In these broadband multicarrier embodiments, the UE 200 and the eNB 300 may be configured to communicate in accordance with an OFDMA technique.

In some embodiments, the UE 102 (FIG. 1) may support inter-frequency handover, and may receive a measurement report configuration message from the eNB 104. The message may include a request for application information to be determined at the UE 102. The UE 102 may transmit a measurement report having the application information. The application information can include an operating system identifier, such as a Universally Unique Identifier (UUID). Additionally, the application information can includes a quality of service (QoS) class identifier (QCI) associated with the application. The measurement report can be based on the QCI. Furthermore, the UE 102 can access an application list having different types of applications. The application information can include an application type for the application based on the accessed list, and the application type can be a bit string. For example, the application type can correspond to the application being a voice application, a video application, a web browsing application, or an interactive gaming application. These embodiments are described in more detail below.

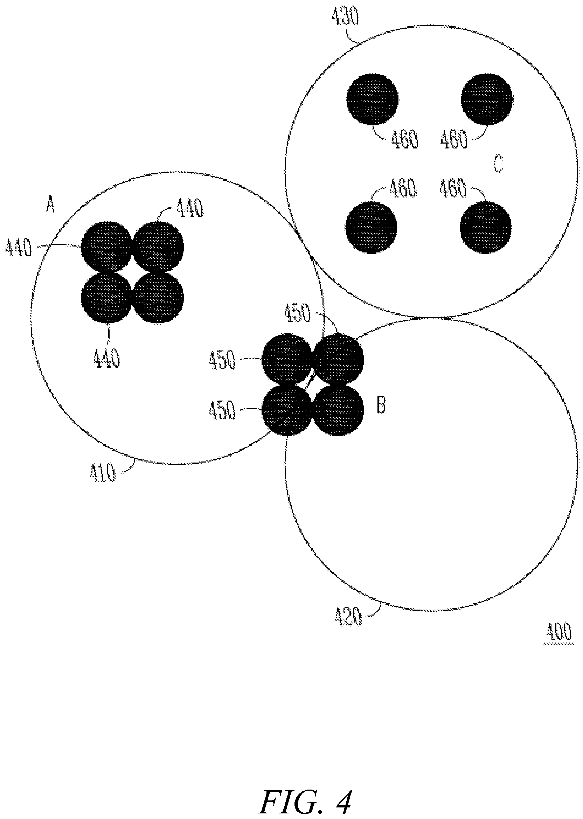

FIG. 4 illustrates an example of a scenario 400 in which a macro cell overlay and multiple micro cells are deployed, in accordance with some embodiments. In some cases, a micro cell may be similar to a picocell or femtocell as described earlier, and may be served by a micro eNB 104 (FIG. 1) as also described earlier. In addition, a macro cell may be served by a macro eNB 104 as described earlier, in some cases. It should be noted that embodiments are not limited by the example scenario 400 shown in FIG. 4 in terms of the number of macro cells, micro cells, or clusters, or in terms of the layout or other geographical aspects shown. In the scenario 400, the macro cell overlay includes three cells 410, 420, 430. In addition, micro cells 440 are deployed as a "cluster" A within the macro cell 410, while micro cells 450 are deployed as a cluster B on the border of coverage of the macro cells 410, 420. Micro cells 460 are deployed within the macro cell 430 in a "non-cluster" deployment C. Accordingly, a cluster may refer to a group of micro cells that may overlap or may be located within a small distance of each other in comparison to the radius of a macro cell. A non-cluster may refer to a group of micro cells that are non-overlapping or are spaced apart by a distance that is not significantly smaller than the macro cell radius.

In some embodiments, the macro cells may use a frequency band that is different from frequency bands used by the micro cells. A UE 102 (FIG. 1) operating in the network shown in FIG. 4 may monitor different cells (macro and micro) in order to determine whether to handover or to determine whether to transmit a measurement report to one or more eNBs 104 for assistance in a handover decision. The report may include application information associated with an application operating at the UE 102.

Conventional handover mechanisms (e.g., current 3GPP specification) rely on the UE 102 performing measurements. For example, if the UE 102 finds a better cell that satisfies one of the event triggers configured by the network, the UE 102 can send the measurement report to the eNB 104. Then the eNB 104 can decide whether or not to handover the UE 102. In a simple network, the conventional handover mechanism may work well. However, networks are becoming more complex by having higher frequency small cells, more frequency layers, different radio access technology (RAT) having different characteristics, and so on.

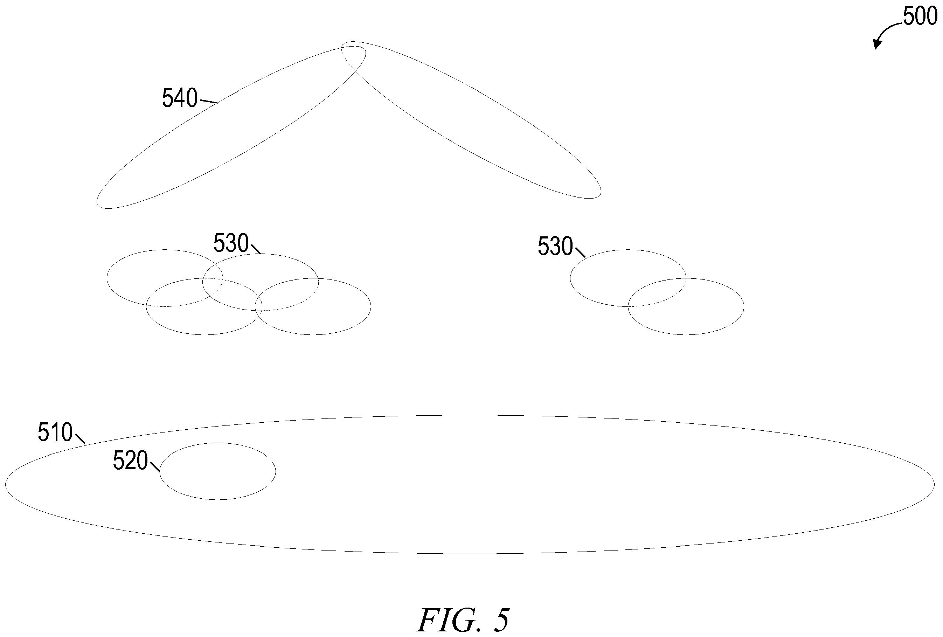

FIG. 5 illustrates an example of a heterogeneous network 500, according to some embodiments. FIG. 5 illustrates an example of different deployments that includes a large cell representing a macro cell 510. The heterogeneous network 500 can also include a small cell 520 (e.g., micro cell) in the same frequency as the macro layer, which includes the macro cell 510. Additionally, the heterogeneous network 500 can include small cells 530 deployed in clusters and small cells deployed in non-clusters (e.g., spread in a city) in a frequency layer different from that of the macro cell 510. Furthermore, the heterogeneous network 500 can include beamforming small cells 540 in a different radio access technology (RAT) which are deployed with beamforming ability. Accordingly, in such a heterogeneous network 500, enhancements to the handover decision can be performed if application information associated with an application operating on the UE 102 is determined.

In some instances, it can be beneficial to allow the network (e.g., eNB 104) to handover the UE 102 based on the application or service operating (e.g., running, being performed) at the UE 102. For example, if the UE 102 is running a heavily loaded application, the network (e.g., eNB 104) may determine to handover the UE 102 to the beamforming small cell 540 layer. Alternatively, if the UE 102 is running a voice application, the network may determine to handover the UE 102 to the macro cell 510 layer.

Moreover, measurement parameters for event triggering reporting directly affect the handover failure rate. For example, when a time-to-trigger (TTT) value or an A3Offset value is reduced, the handover success rate increases. However, reducing the TTT value or the A3Offset value results in a higher ping-pong rate.

In a first scenario, when the UE 102 is running a non-real-time application (e.g., delay-tolerant application), then reducing the ping-pong rate can be a higher priority than increasing the handover success rate. In the first scenario, the UE 102 is configured with parameters that can reduce the ping-pong rate, even though that also decreases the handover success rate.

Alternatively, in a second scenario, when the UE 102 is running a real-time application (e.g., a voice application), increasing the handover success rate can have a higher priority than reducing the ping-pong rate. In the second scenario, the UE 102 is configured with parameters that can increase the handover success rate, even though that can also increase the ping-pong rate.

According to various embodiments, during a handover initiation, the UE 102 can send application information together with the measurement report. Subsequently, the network (e.g., eNB 104) can handover the UE 102 to different frequency layer or cells based on the application information.

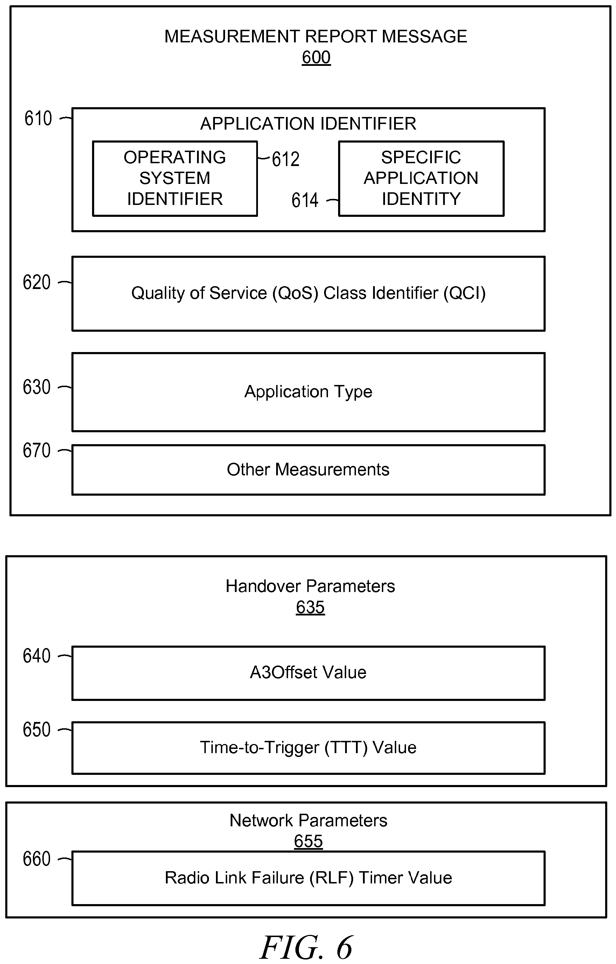

Several example embodiments of a measurement report message will be presented below in FIG. 6. It should be noted that these examples are presented for illustration of concepts described herein, but embodiments are not limited to the order in which parameters or information are presented or to any other presentation aspects, such as syntax or naming conventions. For instance, in some embodiments, a syntax or programming language associated with a standard, such as 3GPP or another standard, may be used. Some embodiments may include some or all parameters or information presented in one or more of these examples, and may include additional parameters or information not shown or described. In addition, while the examples illustrate a measurement report message (e.g., *MeasResult* Information Element (IE)), and a measurement report configuration message (e.g., *ReportConfigToAddModList* IE, and a *ReportConfigEUTRA* IE) used in 3GPP standards, the messages are not limited as such, and may be another message of 3GPP, a message used in other standards, or a message used independently of such standards, in some embodiments.

FIG. 6 illustrates an example of a measurement report message 600, handover parameters 635, and network parameters 655, in accordance with some embodiments. In some instances, the RAN 100 (e.g., eNB 104), configures the handover parameters 635 and network parameters 655 in advance for non-real time application and real time application. Then, the UE 102 applies a handover parameter (e.g., choose either a non-real-time TTT value or a real-time TTT value) based on the application that is running at the UE 102.

The measurement report message 600 may include an application identifier 610. The application identifier 610 can include an operating system identifier 612 of an operating system and a specific application identity 614 of an application in the operating system.

The format of the operating system identifier 612 can be a Universally Unique IDentifier (UUID) as specified in IETF RFC 4122. The UUID enables distributed systems to uniquely identify information without significant central coordination. For example, a UUID can be created by anyone and the UUID can be used to identify an application with reasonable confidence that the same identifier is not unintentionally created to identify another application. The measurement report message 600 having the UUID can therefore be later combined into a single database without needing to resolve identifier conflicts. The UUID can prevent duplicate number collisions in a database table. Therefore, the eNB 104 does not need to resolve identifier conflicts after receiving the application identifier 610.

An example of the measurement report message 600 having the application identifier 610 from the UE 102 to the eNB 104 is shown in Table 1. The application identifier 610 is labeled *"ApplicationIdentityIE,"* and is underlined in Table 1. The *"ApplicationIdentityIE"* can include the operating system identifier 612 and the specific application identity 614 of the application in the operating system.

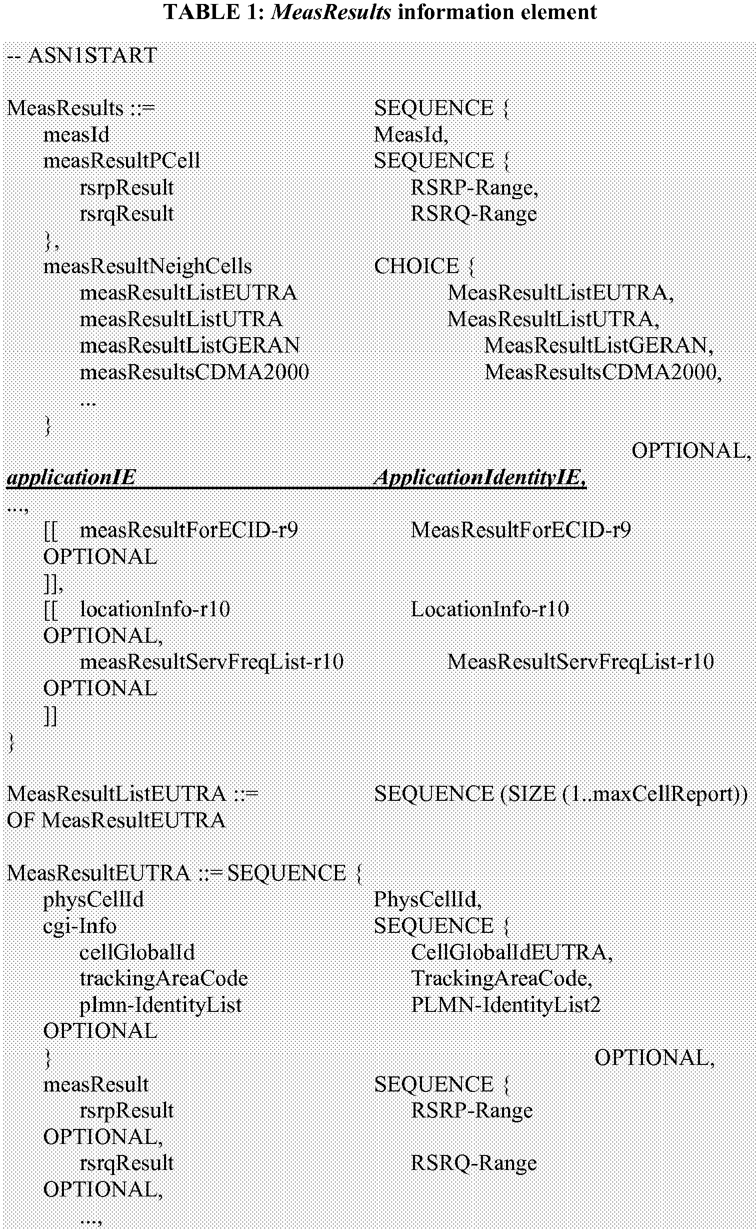

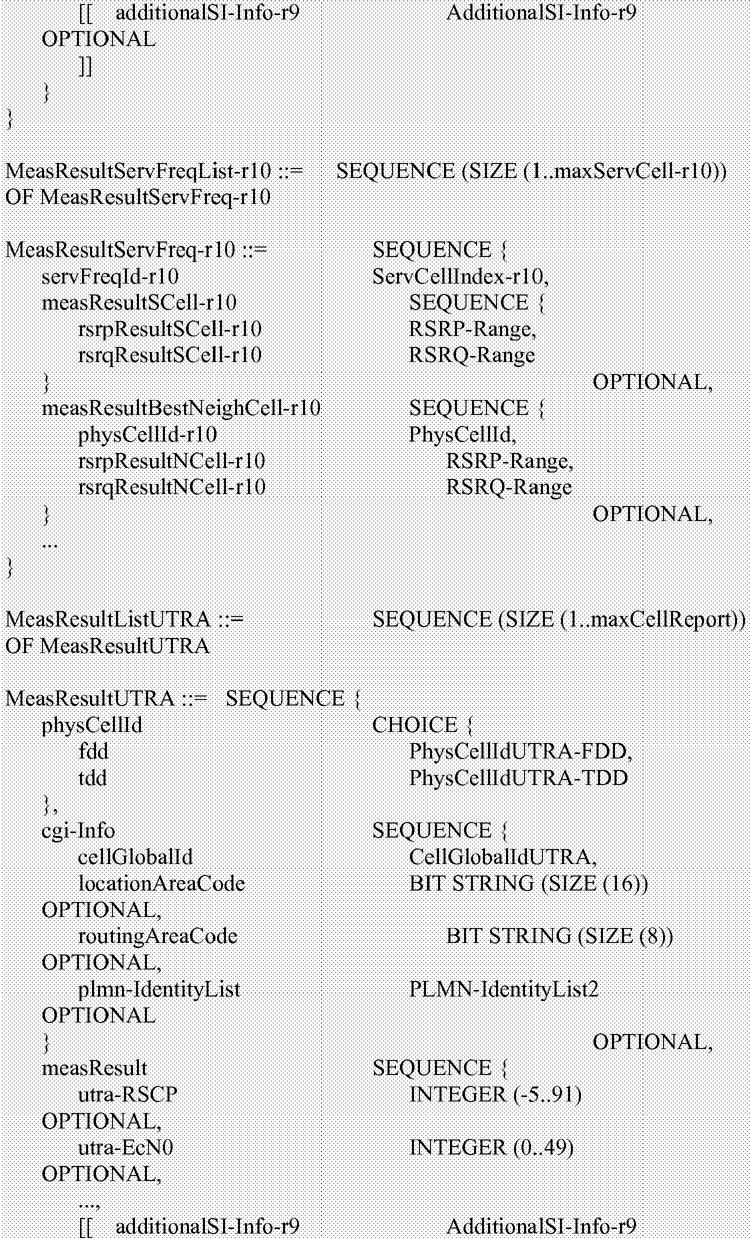

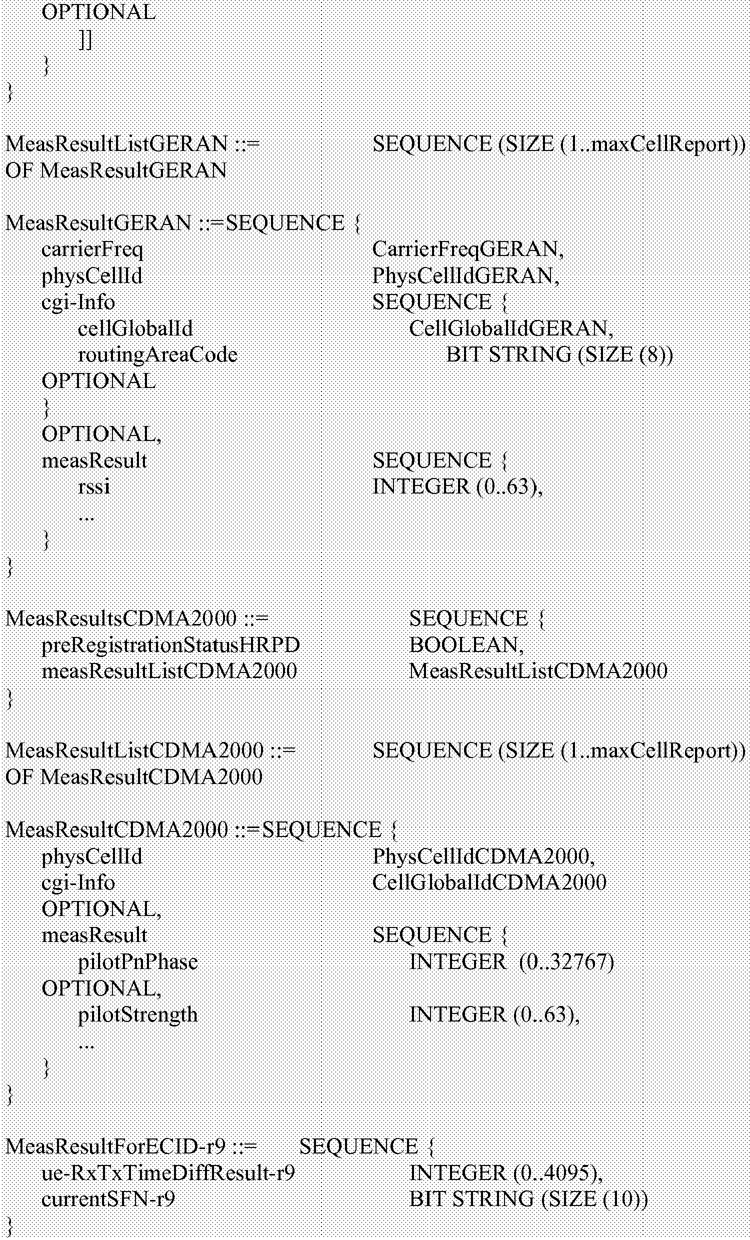

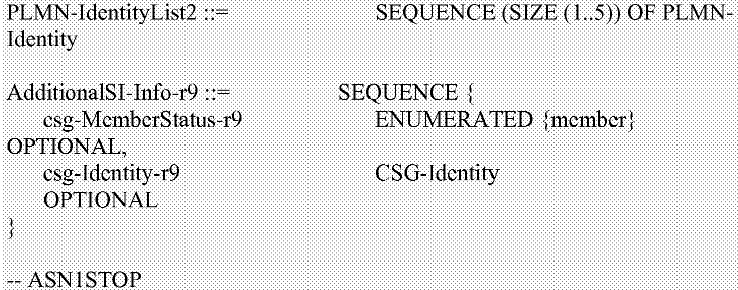

According to various embodiments, the measurement report message 600 can include a quality of service (QoS) class identifier (QCI) 620 associated with the application. For example, the network (e.g., eNB 104) can configure different measurement reporting configurations for different QCIs (e.g., QCI 620). Additionally, The UE 102 can trigger different measurements based on a current QCI (e.g., QCI 620) of the current Evolved Packet System (EPS) bearer configured. For example, the network can configure measurement frequency 3 if the UE 102 is in a voice call, and the network can configure measurement frequency 2 if the UE 102 is browsing the internet. Subsequently, based on the QCI 620 currently supported, the UE 102 can perform different measurements. If multiple EPS bearers are supported at a given time, the UE 102 can choose the EPS bearer based on a pre-defined rule. An example of the pre-defined rule can be to select the EPS bearer with the highest QCI (e.g., QCI 620) from the plurality of QCIs. Alternatively, the UE 102 may be configured to perform and report multiple measurements, one for each QCI supported. Table 2 shows an exemplary configuration per the QCI 620. The QCI 620 in Table 2 is underlined.

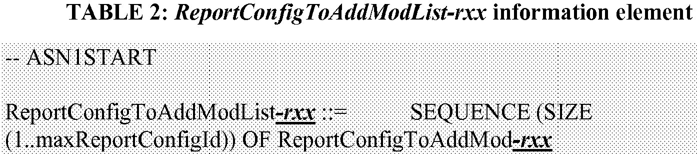

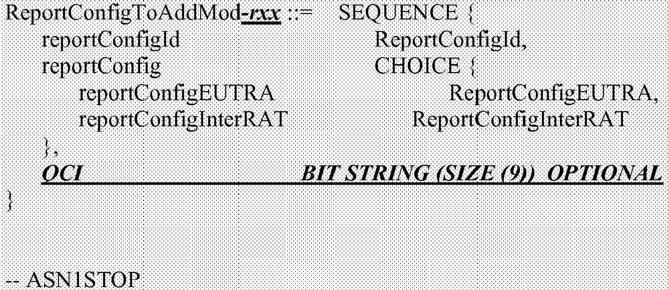

### QCI

Contains the applications the UE is running. The first/ leftmost bit is for QCI 1, the second bit is for QCI 2, and so on. Multiple combinations are allowed with the usage of a bitmap.

According to various embodiments, the measurement report message 600 can include an application type 630 selected from different applications from an accessed application list. In some instances, the network can configure different measurement reporting configurations for different applications. The UE 102 can trigger different measurements based on the application type 630 that the UE 102 is currently running. For example, the network can configure measurement frequency 3 if the UE 102 is running a first application type, and the network can configure measurement frequency 2 if the UE 102 is running a second application type. Subsequently, the UE 102 can perform different measurements based on the application type 630. Additionally, when multiple applications are running on the UE 102, then the UE 102 may be configured with different measurements, one for each application type 630. Alternatively, when multiple applications are running on the UE 102, the UE 102 can select one of the application types 630 based on pre-defined rules.

With regard to multiple applications running on the UE 102, the network can configure different measurements for different application types 630. Table 3 shows an exemplary configuration message based on a list of application types 630. As previously mentioned, *"ApplicationIdentityIE"* can include an operating system identifier and a specific identity of the application in the operating system.

Furthermore, as there can be a very large list of applications supported by the UE 102, the application type 630 can be a default type having a default configuration that can be used generally, plus specific configurations that are supported for small subsets of other application types 630. The different application types 630 can allow the network to differentiate some specific applications, such as by prioritizing an increase for handover success over a decrease of the ping-pong effect.

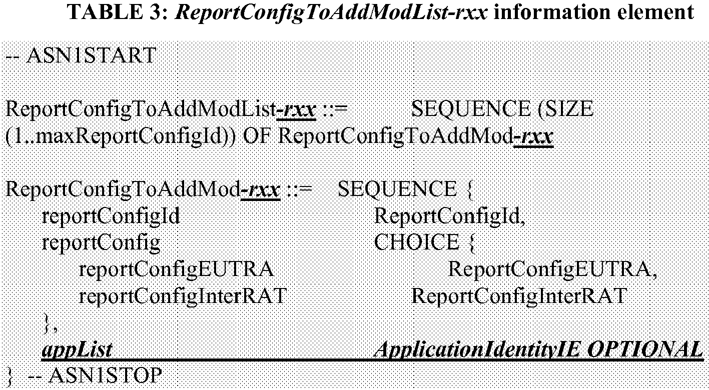

According to various embodiments, the UE 102 can be configured (e.g., by the network) to use different handover parameters 635 based on different QCIs 620. The handover parameters 635 can include, but not limited to, an A3Offset value 640, and a time-to-trigger (TTT) value 650. The network parameters can include, but not limited to, a radio link failure (RLF) RLF timer value 660. As previously mentioned, the eNB 104 can configure the handover parameters 635 and the network parameters 655 based on the application. For example, the eNB 104 configures the handover parameters 635 in advance for non-real time application and real time application. Then, the UE 102 applies (e.g., selects) the handover parameters 635 based on the application that is running at the UE 102. For example, the sending of the measurement reported can be triggered based on the handover parameters.

Table 4 is an example of how the specification 36.331 can be changed in order to specify (e.g., configure) an A3Offset value 640 and a time-to-trigger (TTT) value 650 based on the QCI 620. The changes have been underlined. The values of *"a3-Offset-QCI"* and *"timeToTrigger-QCI"* can be used when the UE 102 is using EPS bearers set for the QCIs supported in the IE "QCI." Additionally, multiple values of QCI can be supported via the usage of a bitmap.

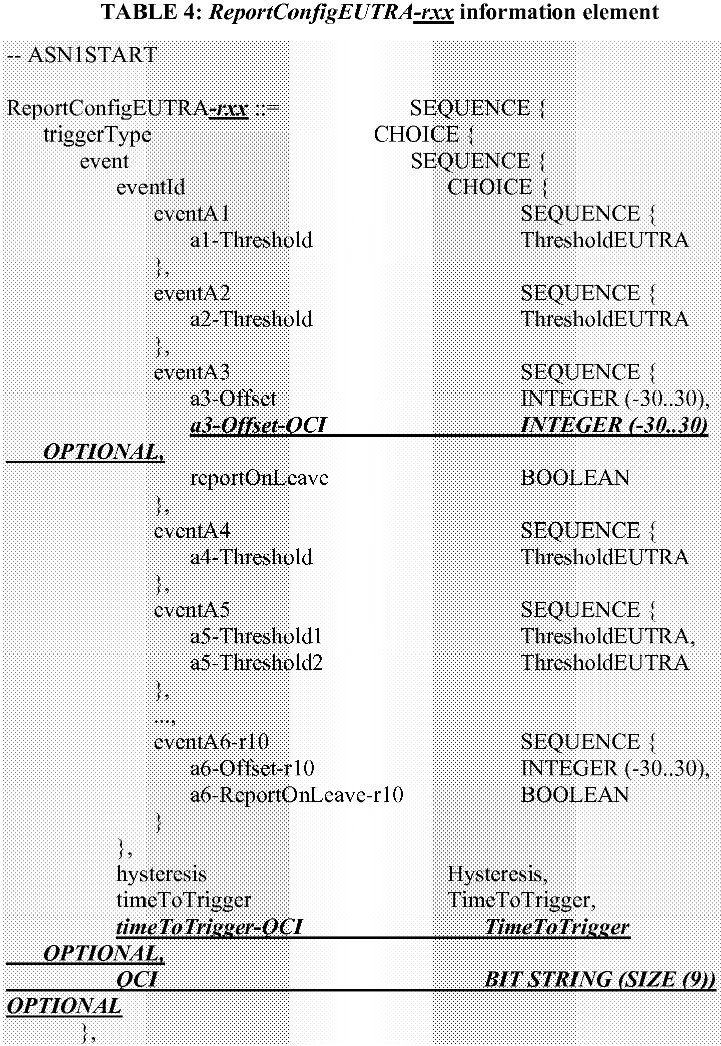

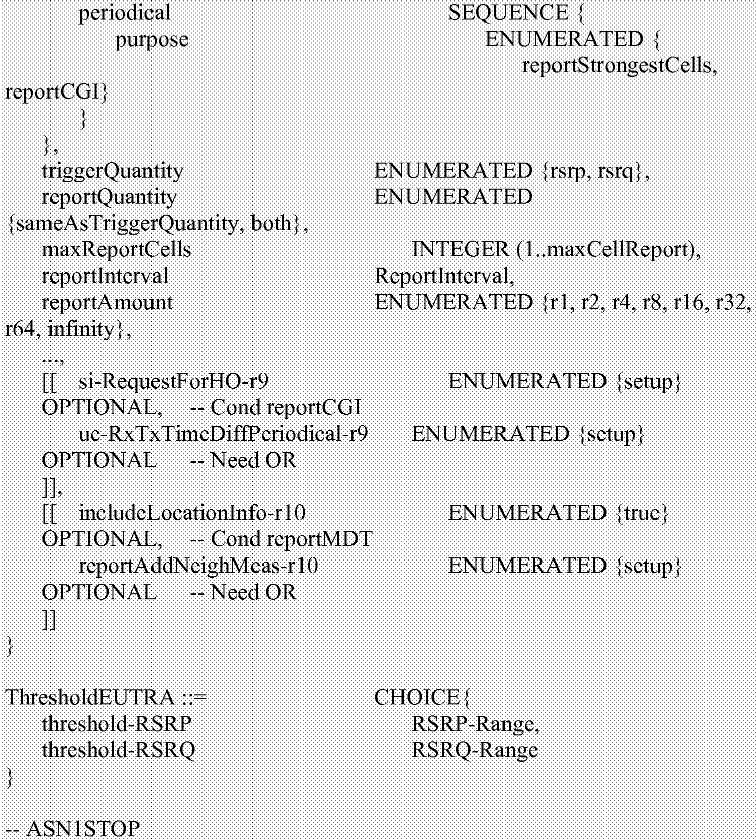

According to various embodiments, a list of application identities can be used to determine (e.g., configure) the A3Offset value 640 and the TTT value 650. In some instances, the UE 102 can use the list of application identities instead of the QCI 620 to determine the A3Offset value 640 and the TTT value 650. For example, the UE 102 can use a default (e.g., legacy) value for all applications, except for the applications associated with application identifiers that are included in the list of application identities. For an application associated with an application identifier that is included in the list of application identities, the UE 102 can use the A3Offset value 640 and the TTT value 650 associated with the specific application identifier. Table 5 shows an exemplary configuration message in which the UE 102 can use the A3Offset value 640 and the TTT value 650 associated with the specific application identifier. As previously mentioned, *"ApplicationIdentityIE"* can include an operating system identifier and a specific identity of the application in the operating system.

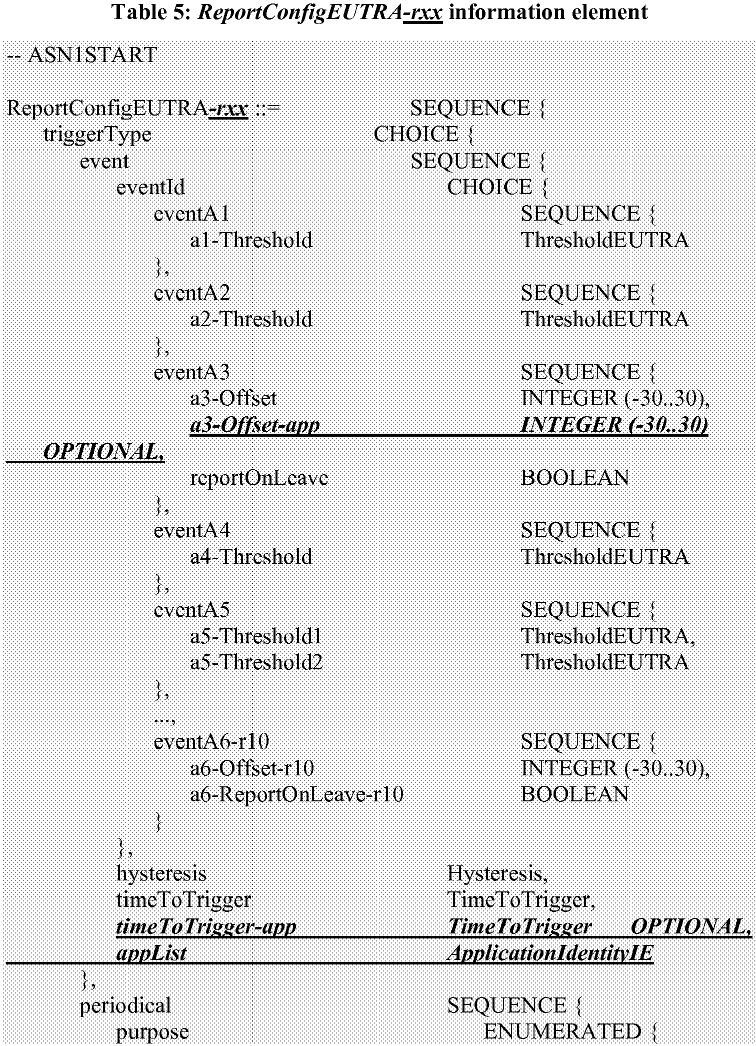

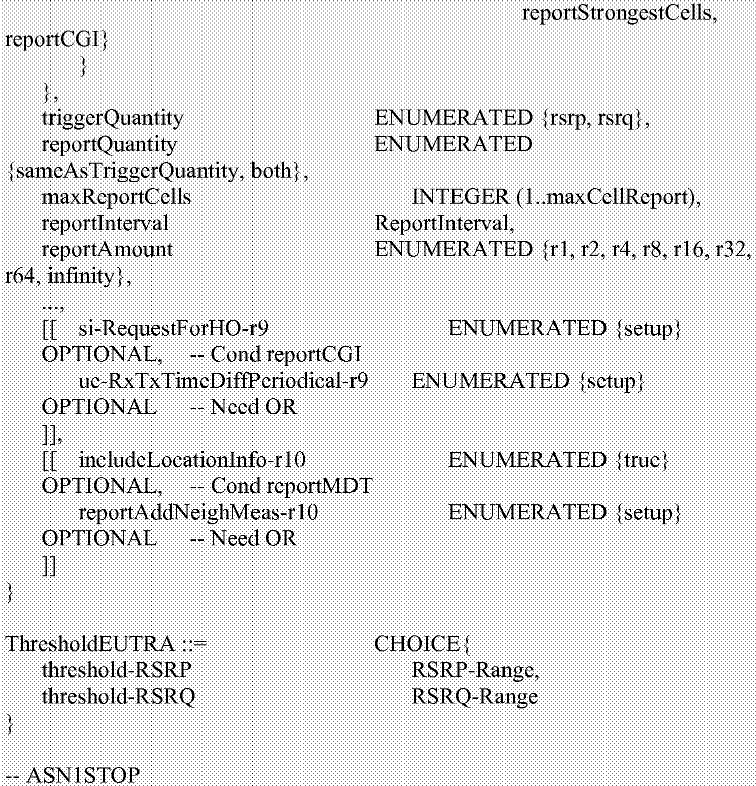

According to various embodiments, a radio link failure (RLF) timer value 660 can be determined based on the application information. The RLF timer value 660 is a value configured by the RAN 100 to monitor link failure at the serving cell. The RLF timer value 660 is configured by the network but it is not used for handover, instead it is used for radio link monitoring. For example, if an out-of-sync signal is sent by a lower layer to the UE 102, the UE 102 will start a timer with a RLF timer value 660, Furthermore, when the timer expires, the UE 102 can declare a RLF. When an RLF is declared, the UE 102 performs an RLF recovery and worst cell selection procedure all over.

The RLF timer value 660 is an example of a network parameter 655. A network parameter can include any parameter this is configurable by the network (e.g., RAN 100, eNB 104, core network 120).

As previously mentioned, the network (e.g., eNB 104) can base the handover decision on the application information received from the UE 102. For example, if the UE 102 is running a real-time application such as a voice call, the handover success rate can have a higher priority because a break in the call affects the user's quality of experience. If the UE 102 is running a real-time application, the TTT value 640 can be reduced to minimize handover failure. Alternatively, if the UE 102 is running a non-real-time application, the UE 102 can be configured by the network to use a longer TTT (e.g., the TTT value 640 can be increased), allowing for the minimization of ping-pong effects at the natural cost of a controlled increase of probability of a handover failure.

By shortening the TTT value 640, the UE 102 can send the measurement report message 600 earlier, and thus the UE 102 can receive the handover command (e.g., handover decision from the eNB 104) earlier.

In order to maximize even further the success of the handover, the network (e.g., eNB 104) can increase the RLF timer value 660. An increase in the RLF timer value 660 can give the UE 102 more time to synchronize with the new cell. If the UE 102 is running a real-time application and there is a handover failure, it is preferable for the UE 102 to quickly detect the handover failure. Therefore, by reducing the RLF timer value 660 for real-time applications, the network enables the UE 102 to more quickly detect a handover failure. Alternatively, the RLF timer value 660 can be increased for non-real-time applications.

In addition, other measurements 670, parameters, or information may be included in the measurement report message 600. As an example, measurements different from those described previously may be used, and may relate to any suitable performance measurements taking on values in a range that may be defined according to thresholds, offsets, or other numbers. Such measurements may be associated with serving cells, neighbor cells, primary cells, secondary cells, or candidate handover cells. As another example, timer values or hysteresis values may indicate time durations over which a condition is met in order for a handover decision to be based thereon.

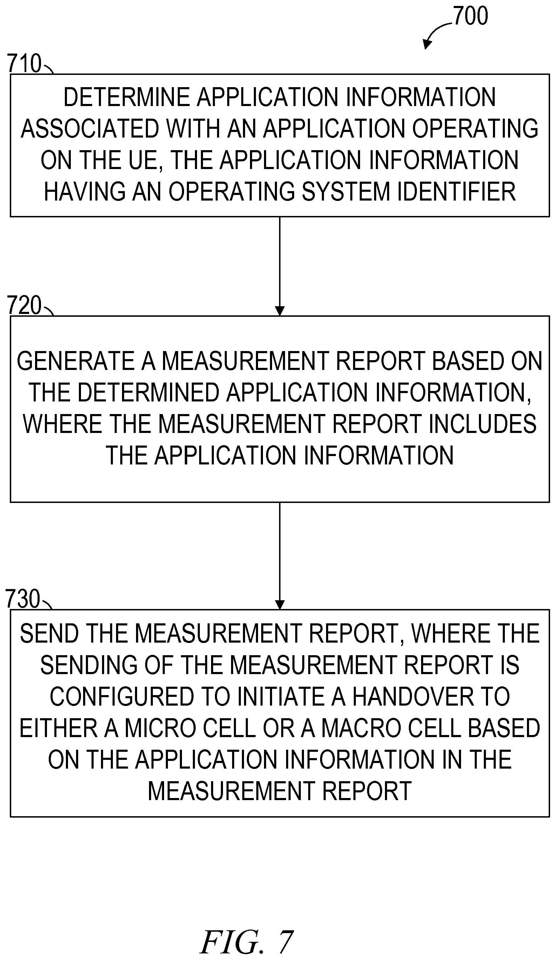

FIG. 7 illustrates the operation of a method 700 for supporting an inter-frequency handover based on application information, in accordance with some embodiments. As illustrated in FIGS. 4 and 5, the handover may occur between a macro cell (e.g., macro cell 410, macro cell 510) that operates in a first frequency band and a micro cell (e.g., micro cells 440, small cells 530) that operates in a second frequency band different from the first frequency band. In some embodiments, the micro cell may be included in a cluster of micro cells that operates in the second frequency band. Embodiments are not limited to these configurations, however, and some or all of the techniques and operations described herein may be applied to systems or networks that exclusively use macro cells or micro cells. In addition, embodiments are also not limited to inter-frequency handovers.

It is important to note that embodiments of the method 700 may include additional or even fewer operations or processes in comparison to what is illustrated in FIG. 7. In addition, embodiments of the method 700 are not necessarily limited to the chronological order that is shown in FIG. 7. In describing the method 700, reference may be made to FIGS. 1-6, although it is understood that the method 700 may be practiced with any other suitable systems, interfaces, and components. For example, reference may be made to the scenario 400 in FIG. 4 (described earlier) for illustrative purposes, but the techniques and operations of the method 700 are not so limited.

In addition, while the method 700 and other methods described herein may refer to eNBs 104 or UEs 102 operating in accordance with 3GPP or other standards, embodiments of those methods are not limited to just those eNBs 104 or UEs 102 and may also be practiced by other mobile devices, such as a Wi-Fi access point (AP) or user station (STA). Moreover, the method 700 and other methods described herein may be practiced by wireless devices configured to operate in other suitable types of wireless communication systems, including systems configured to operate according to various IEEE standards such as IEEE 802.11.

The method 700 can be performed by the UE 102 for handover initiation in a cellular network comprising macro cells (e.g., macro cell 410, macro cell 420, macro cell 430, macro cell 510) and micro cells (e.g., micro cells 440, micro cells 450, micro cells 460, small cells 530, small cells 540).

At operation 710 of the method 700, the UE 102 can determine application information associated with an application operating on the UE 102. As described with reference to FIG. 6, the application information can include an application identifier 610, a QCI 620, an application type 630, other measurements 670, and so on. The application identifier 610 can include an operating system identifier 612, such as a UUID, and a specific application identity 614. In some instances, the application information can be a bit string associated with different application types. The application type can correspond to the application being a voice application, a video application, a web browsing application, an interactive gaming application, or so on. The bit string can be eight bits and can use an enumeration whereby the first (e.g., leftmost) bit indicates a voice application, the second bit indicates a video application, the third bit indicates a short message service (SMS) application, the fourth bit indicates a web browsing application, the fifth bit indicates an interactive gaming application, and the other three bits are reserved for future use for other application types.

In current implementations, the UE 102 performs measurement for the measurement report. Additionally, the measurement report is generated when TTT is expired (e.g., based on the TTT value 650), and the UE 102 is ready to send the report.

At operation 720, the UE 102 generates a measurement report (e.g., measurement report 600) based on the determined application information. The measurement report can include the application information. Additionally, the eNB 104 can determine (e.g., configure) handover parameters 635 (e.g., an A3Offset value 640, a TTT value 650) and network parameters 655 (e.g., an RLF timer value 660) based on the application information (e.g., QCI 620, application type 630). The sending of the measurement report can be triggered based on the handover parameters 635 and the network parameters 655. For example, the UE 102 can apply the handover parameters 635 based on the determined application information to determine when to send the measurement report. FIG. 6 describes some of the techniques for the eNB to configure the A3Offset value 640, the TTT value 650, and the RLF timer value 660.

As previously mentioned, under current implementations, the UE 102 performs measurements to be used in the measurement report. However, as described herein, the handover parameters 635 and the network parameters 655 for sending the measurement report can be different based on the application. The plurality of measurement reports can have a measurement report for each QCI in the plurality of QCIs. Subsequently, the UE 102 can send the plurality of measurement reports to an eNB 104 based on the handover parameters 635 and the network parameters 655 for each measurement report.

Alternatively, when a plurality of QCIs is included, the sending of the measurement report may be triggered based on a parameter derived from a first QCI. The first QCI having a higher priority than the remaining QCIs from the plurality of QCIs.

At operation 730, the UE 102 can send the measurement report to the eNB 104 when the time to trigger (TTT) is expired. The sending of the measurement report is triggered based on the handover parameters 635 (e.g., the TTT value 650) and network parameters 655. Additionally, the sending of the measurement report can be configured to initiate a handover to either a micro cell or a macro cell based on the application information in the measurement report. For example, the eNB 104 can base the handover decision on the measurement report received from the UE 102.

In some instances, the application information can include a non-real-time QCI for a non-real-time application and a real-time QCI for a real-time application. A non-real-time TTT value can be configured, by the eNB 104, based on the non-real-time QCI, and the non-real TTT value can be used for triggering the measurement report. For example, when a timer having a non-real-time TTT value expires, the UE 102 can transmit the measuring report associated with the non-real time application.

Additionally, the UE 102 can further apply the real-time TTT value (configured by the network in advance via RRC signaling in the measurement configuration) based on the real-time QCI, and send the real-time measurement report to an eNB 104. The real-time TTT value can be used for triggering the measurement report to be sent by the UE 102. The real-time TTT value is lower than the non-real-time TTT value.

In some instances, the method 700 can further include applying a TTT value 650 based on the determined application information. Additionally, the application information can correspond to a non-real-time application or a real-time application. Furthermore, the non-real-time TTT value for the non-real-time application can be higher than the real-time TTT value for the real-time application.

In some instances, the method 700 can further include applying an A3Offset value 640 based on the determined application information. The A3offset 640 can be used, in coordination with the TTT value 650, for the UE 102 to determine when to send the report. For example, when the event is triggered (e.g., based on the A3offset condition being satisfied), then the UE wait for the TTT, when TTT expired, the UE 102 sends the measurement report. Additionally, the application information can correspond to a non-real-time application or a real-time application. Furthermore, the non-real-time A3Offset value for the non-real-time application can be higher than the real-time A3Offset value for the real-time application.

In some instances, the method 700 can include accessing an application list. The application list can have different types of applications. The UE 102 or eNB 104 can further determine an application type for the application based on the accessed application list, where the application information includes the determined application type.

In some instances, the method 700 can further include applying an RLF timer value 660 based on the determined application information. Similar to the A3offset value 640 and the TTT value 650, the UE 102 applies RLF timer value 660 based on the application information. The UE 102 can declare a radio link failure upon a timer having the RLF timer value expiring. The RLF timer value 660 is a value configured by the network to monitor link failure at the serving cell. If an out-of-sync signal is sent by the lower layer to the UE 102, the UE 102 will start a timer having the RLF timer value 660. When the timer expires, the UE can declare RLF. When RLF is declared, the UE will have to perform RLF recovery and worst cell selection procedure all over.

Additionally, the application information can correspond to a non-real-time application or a real-time application. Furthermore, the non-real-time RLF timer value for the non-real-time application can be lower than the real-time RLF timer value for the real-time application.

The measurement report may be transmitted for a candidate handover cell. That is, the measurement report may be transmitted in response to a triggering, at the UE 102, for the candidate handover cell. The measurement report may be transmitted to a serving eNB 104 or other eNBs 104. In some embodiments, the report may include values or a history for signal measurement results like those previously described. While the report may be related to a single candidate handover cell, such embodiments are not limiting. The report may include previously described information for multiple candidate handover cells in some embodiments.

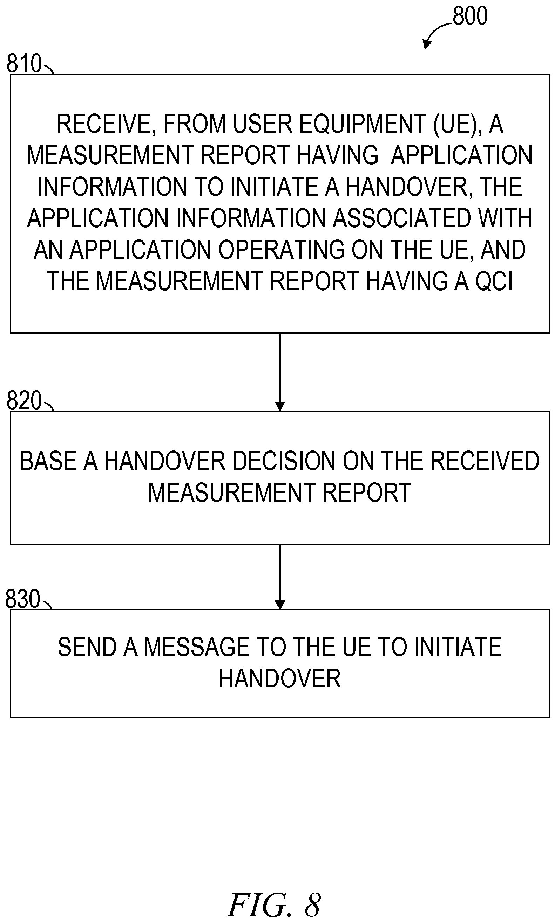

FIG. 8 illustrates the operation of a method 800 for determining a handover based on a measurement report having application information, in accordance with some embodiments. It is important to note that embodiments of the method 800 may include additional or even fewer operations or processes in comparison to what is illustrated in FIG. 8. In addition, embodiments of the method 800 are not necessarily limited to the chronological order that is shown in FIG. 8. In describing the method 800, reference may be made to FIGS. 1-7, although it is understood that the method 800 may be practiced with any other suitable systems, interfaces, and components.

In addition, while the method 800 and other methods described herein may refer to eNBs 104 or UEs 102 operating in accordance with 3GPP or other standards, embodiments of those methods are not limited to just those eNBs 104 or UEs 102 and may also be practiced by other mobile devices, such as a Wi-Fi access point (AP) or user station (STA). Moreover, the method 800 and other methods described herein may be practiced by wireless devices configured to operate in other suitable types of wireless communication systems, including systems configured to operate according to various IEEE standards such as IEEE 802.11.

The method 800 can be performed by an eNB 104 for a handover decision in a cellular network comprising macro cells and micro cells.

At operation 810, the eNB 104 can include processing circuitry to receive, from the UE 102, a measurement report (e.g., measurement report message 600) having application information to initiate a handover. The application information is associated with an application operating on the UE 102. The measurement report can include an application identifier 610, a QCI 620, an application type 630, an A3Offset value 640, a TTT value 650, an RLF timer value 660, and other measurements 670.

At operation 820, the processing circuitry of the eNB 104 can base a handover decision on the received measurement report from operation 810. For example, when the application information is associated with a real-time application (e.g., voice application), the eNB 104 can decide to handover to a macro cell. In another example, when the application information is associated with a non-real-time or data intensive application, the eNB 104 can handover the UE 102 to a beamforming small cell layer.

At operation 830, the eNB 104 can include physical-layer circuitry (PHY) to send a message to the UE 102 to initiate the handover. A handover message that indicates or instructs a handover to one of the candidate handover cells may be received at the UE 102. The handover message may be transmitted by one of the eNBs 104, such as the eNB 104 of the serving cell. Accordingly, the decision of the eNB 104 to indicate the handover and to transmit the handover message may be performed based at least partly on information included in the measurement report previously described.

In some instances, the eNB can configure a real-time TTT value associated with a real-time application, and can configure a non-real-time TTT value associated with a non-real-time application. The UE 102 can apply the TTT value to determine when to send the measurement report.

In some instances, the eNB can configure a real-time A3Offset value associated with a real-time application, and can configure a non-real-time A3Offset value associated with a non-real-time application. The UE 102 can apply the A3Offset value to determine when to send the measurement report.

In some instances, the eNB can configure a real-time RLF timer value associated with a real-time application, and can configure a non-real-time RLF timer value associated with a non-real-time application. The UE 102 can declare a radio link failure upon a timer having the RLF timer value expiring.

Additionally, the UE 102 may exchange one or more handover setup messages with the candidate handover cell. The exchange may take place in response to the reception of the handover message.

According to some embodiments, a UE arranged for handover initiation in a cellular network comprising macro cells and micro cells is disclosed herein. The UE can comprise processing circuitry to determine application information associated with an application operating on the UE, the application information having an operating system identifier. The processing circuitry can further generate a measurement report based on the determined application information, wherein the measurement report includes the application information. Additionally, the UE can comprise physical-layer circuitry (PHY) to send the measurement report configured to initiate a handover, wherein the handover is to a micro cell or a macro cell based on the measurement report. Furthermore, the application information further includes a quality of service (QoS) class identifier (QCI) associated with the application.

A non-transitory computer-readable storage medium that stores instructions for execution by one or more processors to perform operations for handover initiation in a cellular network comprising macro cells and micro cells is also disclosed herein. The operations may configure the one or more processors to determine application information associated with an application operating on a UE, the application information having a quality of service (QoS) class identifier (QCI). The one or more processors may generate a measurement report based on the QCI, wherein the measurement report includes the application information, and may send the measurement report configured to initiate a handover, wherein the handover is to a micro cell or a macro cell based on the measurement report.

In some instances, the application information can include a non-real-time QCI for a non-real-time application and a real-time QCI for a real-time application. The measurement report can be based on the non-real-time QCI and can have a non-real-time time-to-trigger (TTT) value. The operations can further configure the UE to generate a real-time measurement report based on the real-time QCI, the real-time measurement report having a real-time TTT value lower than the non-real-time TTT value, and to send the real-time measurement report.

## Claims

1. An apparatus of a User Equipment, UE, (200) for handover initiation in a cellular network comprising macro cells and micro cells (104), the apparatus comprising:
processing circuitry (206) configured to:
determine application information associated with an application operating on the UE; and
generate a measurement report based on the determined application information, wherein the measurement report includes the application information; and
physical-layer circuitry, PHY, (202) configured to send the measurement report,
wherein the sending of the measurement report is configured to initiate a handover to either a micro cell or a macro cell based on the application information in the measurement report; **characterized in that** the application information includes an operating system identifier (612).

2. The apparatus of claim 1, wherein the operating system identifier (612) is a Universally Unique Identifier, UUID.

3. The apparatus of claim 1, wherein the application information includes a plurality of quality of service, QoS, class identifiers, QCIs (620), and wherein the processing circuitry is further configured to:
generate a plurality of measurement reports based on the plurality of QCIs (620), the plurality of measurement reports having a measurement report for each corresponding QCI in the plurality of QCIs (620); and
trigger to send the plurality of measurement reports based on a parameter derived from each corresponding QCI (620).

4. The apparatus of claim 1, wherein the application information includes a non-real-time QCI (620) for a non-real-time application associated with the measurement report, and a real-time QCI for a real-time application associated with a real-time measurement report, the processing circuitry is further configured to:
apply a non-real-time time-to-trigger, TTT, value based on the non-real-time QCI (620); and
apply a real-time TTT value based on the real-time QCI, the real-time TTT value being lower than the non-real-time TTT value; and
the PHY is further configured to send the real-time measurement report,
wherein the sending of the measurement report is based on the non-real-time TTT value, and wherein the sending of the real-time measurement report is based on the real-time TTT value.

5. The apparatus of claim 1, the processing circuitry (206) is further configured to:
apply a time-to-trigger, TTT, value based on the determined application information, wherein the sending of the measurement report is based on a timer having the TTT value expiring.

6. The apparatus of claim 5, wherein the application information corresponds to a non-real-time application or a real-time application, and wherein a non-real-time TTT value for the non-real-time application is higher than a real-time TTT value for the real-time application.

7. The apparatus of claim 1, the processing circuitry (206) is further configured to:
apply an A3Offset value based on the determined application information, wherein the sending of the measurement report is based on the A3Offset value.

8. The apparatus of claim 1, the processing circuitry (206) further configured to:
access an application list, the application list having different types of applications;
determine an application type for the application based on the accessed application list, wherein the application information includes the determined application type.

9. The apparatus of claim 1, the processing circuitry (206) further configured to:
apply a radio link failure, RLF, timer value based on the determined application information, wherein the UE declares radio link failure upon a timer having the RLF timer value expiring.

10. A method (800) to perform a handover decision in a cellular network comprising macro cells and micro cells, the method comprising:
receive (810), by processing circuitry of an Evolved Node B, eNB, from a User Equipment (UE), a measurement report having application information to initiate a handover, the application information associated with an application operating on the UE; the measurement report having a quality of service, QoS, class identifier, QCI; and
basing (820), by processing circuitry of the eNB, a handover decision on the received measurement report; and
sending (830), by physical-layer circuitry, PHY, (302) of the eNB, a message to the UE to initiate handover;
**characterized in that**
the measurement report includes an operating system identifier (612).

11. The method (800) of claim 10, wherein the handover decision is to handover to a macro cell when the application is a real-time application, and wherein the handover decision is to handover to a micro cell when the application is a non-real-time application.

12. The method (800) of claim 10, further comprising, by the processing circuitry of the eNB:
configuring a real-time time-to-trigger, TTT, value associated with a real-time application; and
configuring a non-real-time TTT value associated with a non-real-time application.

13. The method (800) of claim 10, further comprising, by the processing circuitry of the eNB:
configuring a real-time A3Offset value associated with a real-time application; and
configuring a non-real-time A3Offset value associated with a non-real-time application.

14. The method (800) of claim 10, further comprising, by the processing circuitry of the eNB:
configuring a real-time RLF timer value associated with a real-time application; and
configuring a non-real-time RLF timer value associated with a non-real-time application.

## Patentansprüche

1. Vorrichtung eines Benutzergeräts (User Equipment, UE) (200) für den Übergabestart in einem zellularen Netzwerk, das Makrozellen und Mikrozellen (104) umfasst, die Vorrichtung umfassend:
eine Verarbeitungsschaltung (206), die konfiguriert ist, um:
Anwendungsinformationen zu bestimmen, die einer auf dem UE betriebenen Anwendung zugeordnet sind; und
einen Messbericht basierend auf den bestimmten Anwendungsinformationen zu erzeugen, wobei der Messbericht die Anwendungsinformationen enthält; und
eine Schaltung der physischen Schicht (PHY) (202), die konfiguriert ist, um den Messbericht zu senden,
wobei das Senden des Messberichts konfiguriert ist, um eine Übergabe entweder an eine Mikrozelle oder eine Makrozelle basierend auf den Anwendungsinformationen in dem Messbericht zu starten; **dadurch gekennzeichnet, dass** die Anwendungsinformationen eine Betriebssystemkennung (612) enthalten.

2. Vorrichtung nach Anspruch 1, wobei die Betriebssystemkennung (612) ein Universally Unique Identifier (UUID) ist.

3. Vorrichtung nach Anspruch 1, wobei die Anwendungsinformationen eine Vielzahl von Dienstgüte(Quality of Service, QoS)-Klassekennungen (QoS Class Identifiers, QCIs) (620) enthalten, und wobei die Verarbeitungsschaltung ferner konfiguriert ist, um:
eine Vielzahl von Messberichten basierend auf der Vielzahl von QCIs (620) zu erzeugen, wobei die Vielzahl von Messberichten einen Messbericht für jede entsprechende QCI in der Vielzahl von QCIs (620) aufweisen; und
auszulösen, um die Vielzahl von Messberichten basierend auf einem von jedem entsprechenden QCI (620) abgeleiteten Parameter zu senden.

4. Vorrichtung nach Anspruch 1, wobei die Anwendungsinformationen eine Nicht-Echtzeit-QCI (620) für eine dem Messbericht zugeordnete Nicht-Echtzeit-Anwendung und eine Echtzeit-QCI für eine einem Echtzeit-Messbericht zugeordnete Echtzeit-Anwendung enthalten, wobei die Verarbeitungsschaltung ferner konfiguriert ist, um:
einen Nicht-Echtzeit-Wert für die Zeit zum Auslösen (Time to Trigger, TTT) basierend auf der Nicht-Echtzeit-QCI (620) anzuwenden; und
einen Echtzeit-TTT-Wert basierend auf der Echtzeit-QCI anzuwenden, wobei der Echtzeit-TTT-Wert niedriger als der Nicht-Echtzeit-TTT-Wert ist; und
die PHY ferner konfiguriert ist, um den Echtzeit-Messbericht zu senden, wobei das Senden des Messberichts auf dem Nicht-Echtzeit-TTT-Wert basiert und wobei das Senden des Echtzeit-Messberichts auf dem Echtzeit-TTT-Wert basiert.

5. Vorrichtung nach Anspruch 1, wobei die Verarbeitungsschaltung (206) ferner konfiguriert ist, um:
einen Wert für die Zeit zum Auslösen (TTT) basierend auf den bestimmten Anwendungsinformationen anzuwenden, wobei das Senden des Messberichts auf einem Zeitgeber basiert, dessen TTT-Wert abläuft.

6. Vorrichtung nach Anspruch 5, wobei die Anwendungsinformationen einer Nicht-Echtzeit-Anwendung oder einer Echtzeit-Anwendung entsprechen und wobei ein Nicht-Echtzeit-TTT-Wert für die Nicht-Echtzeit-Anwendung höher als ein Echtzeit-TTT-Wert für die Echtzeit-Anwendung ist.

7. Vorrichtung nach Anspruch 1, wobei die Verarbeitungsschaltung (206) ferner konfiguriert ist, um:
einen A3Offset-Wert basierend auf den bestimmten Anwendungsinformationen anzuwenden, wobei das Senden des Messberichts auf dem A3Offset-Wert basiert.

8. Vorrichtung nach Anspruch 1, wobei die Verarbeitungsschaltung (206) ferner konfiguriert ist, um:
auf eine Anwendungsliste zuzugreifen, wobei die Anwendungsliste unterschiedliche Typen von Anwendungen aufweist;
einen Anwendungstyp für die Anwendung basierend auf der Anwendungsliste, auf die zugegriffen wird, zu bestimmen, wobei die Anwendungsinformationen den bestimmten Anwendungstyp enthalten.

9. Vorrichtung nach Anspruch 1, wobei die Verarbeitungsschaltung (206) ferner konfiguriert ist, um:
einen Zeitgeberwert für einen Funkverbindungsfehler (Radio Link Failure, RLF) basierend auf den bestimmten Anwendungsinformationen anzuwenden, wobei das UE einen Funkverbindungsfehler meldet, wenn bei einem Zeitgeber der RLF-Zeitgeberwert abläuft.

10. Verfahren (800) zum Durchführen einer Übergabeentscheidung in einem zellularen Netzwerk, das Makrozellen und Mikrozellen umfasst, das Verfahren umfassend:
Empfangen (810), durch eine Verarbeitungsschaltung eines evolvierten Knotens B (evolved Node B, eNB), von einem Benutzergerät (UE), eines Messberichts, der Anwendungsinformationen aufweist, um eine Übergabe zu starten, wobei die Anwendungsinformationen einer Anwendung zugeordnet sind, die auf dem UE betrieben wird; wobei der Messbericht eine Dienstgüte(QoS)-Klassekennung (QCI) aufweist; und
Basieren (820), durch eine Verarbeitungsschaltung des eNB, einer Übergabeentscheidung auf den empfangenen Messbericht; und
Senden (830), durch die Schaltung der physischen Schicht (PHY) (302) des eNB, einer Nachricht an das UE zum Starten der Übergabe;
**dadurch gekennzeichnet, dass** der Messbericht eine Betriebssystemkennung (612) enthält.

11. Verfahren (800) nach Anspruch 10, wobei die Übergabeentscheidung darin besteht, eine Übergabe an eine Makrozelle durchzuführen, wenn die Anwendung eine Echtzeit-Anwendung ist, und wobei die Übergabeentscheidung darin besteht, die Übergabe an eine Mikrozelle durchzuführen, wenn die Anwendung eine Nicht-Echtzeit-Anwendung ist.

12. Verfahren (800) nach Anspruch 10, ferner umfassend, durch die Verarbeitungsschaltung des eNB:
Konfigurieren eines Echtzeit-Werts für die Zeit zum Auslösen (TTT), der einer Echtzeit-Anwendung zugeordnet ist; und
Konfigurieren eines Nicht-Echtzeit-TTT-Werts, der einer Nicht-Echtzeit-Anwendung zugeordnet ist.

13. Verfahren (800) nach Anspruch 10, ferner umfassend durch die Verarbeitungsschaltung des eNB:
Konfigurieren eines A3Offset-Echtzeitwerts, der einer Echtzeit-Anwendung zugeordnet ist; und
Konfigurieren eines Nicht-Echtzeit-A3Offset-Werts, der einer Nicht-Echtzeit-Anwendung zugeordnet ist.

14. Verfahren (800) nach Anspruch 10, ferner umfassend, durch die Verarbeitungsschaltung des eNB:
Konfigurieren eines Echtzeit-RLF-Zeitgeberwerts, der einer Echtzeit-Anwendung zugeordnet ist; und
Konfigurieren eines Nicht-Echtzeit-RLF-Zeitgeberwerts, der einer Nicht-Echtzeit-Anwendung zugeordnet ist.

## Revendications

1. Appareil d'un équipement utilisateur, UE, (200) pour initiation de transfert dans un réseau cellulaire comprenant des macrocellules et des microcellules (104), l'appareil comprenant :
des circuits de traitement (206) configurés pour :
déterminer des informations d'application associées à une opération d'application s'exécutant sur l'UE ; et
générer un rapport de mesure basé sur les informations d'application déterminées, où le rapport de mesure comprend les informations d'application ; et
des circuits de couche physique, PHY, (202) configurés pour envoyer le rapport de mesure,
où l'envoi du rapport de mesure est configuré pour initier un transfert vers une microcellule ou une macrocellule sur la base des informations d'application contenues dans le rapport de mesure ; **caractérisé en ce que** les informations d'application comprennent un identifiant de système d'exploitation (612).

2. Appareil selon la revendication 1, dans lequel l'identifiant de système d'exploitation (612) est un identifiant universel unique, UUID.

3. Appareil selon la revendication 1, dans lequel les informations d'application comprennent une pluralité d'identifiants de classe, QCI (620), de qualité de service, QoS, et où les circuits de traitement sont en outre configurés pour :
générer une pluralité de rapports de mesure basés sur la pluralité de QCI (620), la pluralité de rapports de mesure ayant un rapport de mesure pour chaque QCI correspondant dans la pluralité de QCI (620) ; et
déclencher pour envoyer la pluralité de rapports de mesure sur la base d'un paramètre dérivé de chaque QCI correspondant (620).

4. Appareil selon la revendication 1, dans lequel les informations d'application comprennent un QCI (620) non en temps réel pour une application non en temps réel associée au rapport de mesure, et un QCI en temps réel pour une application en temps réel associée à un rapport de mesure en temps réel, les circuits de traitement étant en outre configurés pour :
appliquer une valeur de temps de déclenchement, TTT, non en temps réel basée sur le QCI non en temps réel (620) ; et
appliquer une valeur de TTT en temps réel basée sur le QCI en temps réel, la valeur de TTT en temps réel étant inférieure à la valeur de TTT non en temps réel ; et
les circuits PHY sont en outre configurés pour envoyer le rapport de mesure en temps réel, où l'envoi du rapport de mesure est basé sur la valeur TTT non en temps réel, et où l'envoi du rapport de mesure en temps réel est basé sur la valeur TTT en temps réel.

5. Appareil selon la revendication 1, les circuits de traitement (206) étant en outre configurés pour :
appliquer une valeur de temps de déclenchement, TTT, basée sur les informations d'application déterminées, où l'envoi du rapport de mesure est basé sur un temporisateur dont la valeur TTT expire.

6. Appareil selon la revendication 5, dans lequel les informations d'application correspondent à une application non en temps réel ou à une application en temps réel, et où une valeur TTT non en temps réel pour l'application non en temps réel est supérieure à une valeur TTT en temps réel pour l'application en temps réel.

7. Appareil selon la revendication 1, les circuits de traitement (206) étant en outre configurés pour :
appliquer une valeur A3Offset basée sur les informations d'application déterminées, où l'envoi du rapport de mesure est basé sur la valeur A3Offset.

8. Appareil selon la revendication 1, les circuits de traitement (206) étant en outre configurés pour :
accéder à une liste d'applications, la liste d'applications ayant différents types d'applications ;
déterminer un type d'application pour l'application sur la base de la liste d'applications accédée, où les informations d'application comprennent le type d'application déterminé.

9. Appareil selon la revendication 1, les circuits de traitement (206) étant en outre configurés pour :
appliquer une valeur de temporisateur de défaillance de liaison radio, RLF, basée sur les informations d'application déterminées, où l'UE déclare une défaillance de liaison radio lorsqu'un temporisateur voit la valeur de temporisateur RLF arriver à expiration.

10. Procédé (800) pour exécuter une décision de transfert dans un réseau cellulaire comprenant des macrocellules et des microcellules, le procédé comprenant les étapes suivantes :
recevoir (810), par des circuits de traitement d'un noeud B évolué, eNB, depuis un équipement utilisateur (UE), un rapport de mesure ayant des informations d'application pour initier un transfert, les informations d'application étant associées à une application s'exécutant sur l'UE ; le rapport de mesure ayant un identifiant de classe, QCI, de qualité de service, QoS ; et
baser (820), par des circuits de traitement de l'eNB, une décision de transfert sur le rapport de mesure reçu ; et
envoyer (830), par des circuits de couche physique, PHY, (302) de l'eNB, un message à l'UE pour initier un transfert ;
**caractérisé en ce que**
le rapport de mesure comprend un identifiant de système d'exploitation (612).

11. Procédé (800) selon la revendication 10, dans lequel la décision de transfert consiste à effectuer un transfert vers une macrocellule lorsque l'application est une application en temps réel, et où la décision de transfert consiste à effectuer un transfert vers une microcellule lorsque l'application est une application non en temps réel.

12. Procédé (800) selon la revendication 10, comprenant en outre les étapes suivantes, exécutées par les circuits de traitement de l'eNB :
configurer une valeur de temps de déclenchement, TTT, en temps réel associée à une application en temps réel ; et
configurer une valeur TTT non en temps réel associée à une application non en temps réel.

13. Procédé (800) selon la revendication 10, comprenant en outre les étapes suivantes, exécutées par les circuits de traitement de l'eNB :
configurer une valeur A3Offset en temps réel associée à une application en temps réel ; et
configurer une valeur A3Offset non en temps réel associée à une application non en temps réel.

14. Procédé (800) selon la revendication 10, comprenant en outre les étapes suivantes, exécutées par les circuits de traitement de l'eNB :
configurer une valeur de temporisateur RLF en temps réel associée à une application en temps réel ; et configurer une valeur de temporisation RLF non en temps réel associée à une application non en temps réel.
